# EUROPEAN PATENT SPECIFICATION

(11) **EP 0 934 975 B1**
(45) Date of publication and mention of the grant of the patent: **10.08.2005**
(21) Application number: 98102155.3
(22) Date of filing: 07.02.1998
(51) Int. Cl.: C08L 23/10, C08L 53/00, C08G 81/02

(54) **Directly paintable thermoplastic olefin composition containing maleic anhydride-modified polymers**
Direkt anstreichbare thermoplastische Olefinzusammensertzung, die durch Maleinsärueanhydrid modifizierte Polymere enthält
Composition thermoplastique de polyoléfine qui contient des polymères modifiés à l'anhydride maléique pouvant être directement painte

(43) Date of publication of application: 11.08.1999
(73) Proprietor: Basell North America Inc., Elkton, Maryland 21921 (US)
(72) Inventor: Berta, Dominic A., New Castle County, Newark, DE 19713 (US)
(74) Representative: Luderschmidt, Schüler & Partner GbR

(56) References cited:
- EP-A- 0 429 236
- WO-A-98/02490

## Description

This invention relates to thermoplastic olefin compositions containing maleic anhydride-modified polymers and functionalized polymeric additives.

Thermoplastic olefins (TPOs) are uncrosslinked blends of olefin polymers and polyolefin elastomers. They can be made by physically blending in an internal mixer, or by polymerizing in a reactor. These materials are not paintable or coatable, because the paints or coatings consist of polar materials like urethanes, acrylics, epoxies, or melamines that have very poor adhesion to nonpolar materials like polyolefins. Typically an adhesion promoter is used as the tie layer between the TPO substrate and the paint coating. This extra step adds to the cost of the product, and the coating is not very durable.

European Patent Application 662,496 discloses a paintable or printable polymer composition consisting of a polyolefin or polyolefin/rubber blend and 0.1 to 10% by weight of at least one polymeric additive that is the reaction product of (a) a polyolefin or polyester modified by an unsaturated acid, ester or anhydride, and (b) an amine-, hydroxy-, or alkoxy-terminated polyoxyethylene, polyoxypropylene, or a copolymer of the two, e.g., the reaction product of a maleic anhydride-modified polypropylene wax and a methoxy-capped poly(ethylene oxide) glycol.

European Patent Application 634,424 discloses a blend of polypropylene with the reaction product of maleated polypropylene and a polyether amine. The blend displays improved paintability, improved impact resistance, and excellent mold flowability compared to blends of polypropylene and the reaction product of polypropylene and maleated polypropylene. However, the compositions disclosed in EP 662,496 and EP 634,424 are both lacking in durability.

WO-A-98/02490 relates to a compound comprising a blend of polypropylene with the reaction of a functionalised polypropylene and polyether amine in which the polyetheramine is grafted into the functionalised polypropylene the blends are suitable to prepare paintable automotive body parts.

The composition of this invention comprises, by weight:
(1) 100 parts of a thermoplastic olefin comprising:
   (a) 10% to 60% of a propylene homopolymer having an isotactic index greater than 90, or a crystalline propylene copolymer with ethylene and/or a C₄₋₈ α-olefin having a propylene content greater than 85% and an isotactic index of greater than 85%;
   (b) 30% to 60% of an amorphous ethylene-propylene or ethylene-butene copolymer fraction, optionally containing 1% to 10% of a diene, which is xylene soluble at room temperature and contains 30% to 70% ethylene;
   (c) 2% to 20% of a semi-crystalline ethylene-propylene or ethylene-butene copolymer that is xylene insoluble at room temperature and contains greater than 75% but less than 92% ethylene; and
   (d) 5% to 20% of an ethylene polymer having a density of 0.91 to 0.96 g/cm³ and a melt index of 0.1 to 100 g/10 min;
(2) 8 parts to 14 parts of a maleic anhydride-modified propylene homopolymer or ethylene/propylene random copolymer with an ethylene content of 0.5-4 % having a maleic anhydride content of 3% to 4% and a molecular weight Mₙ of 2500 to 25,000, per hundred parts of the thermoplastic olefin;
(3) 5 parts to 14 parts per hundred parts of the thermoplastic olefin of a maleic anhydride-grafted olefin polymer material having a maleic anhydride content of at least 0.3% but less than 3%, selected from the group consisting of:
   (a) a maleic anhydride-grafted polyolefin rubber comprising an ethylene-propylene or ethylene-butene copolymer rubber, optionally containing 0.5% to 10% of a diene, which contains 30% to 70% ethylene, and
   (b) a maleic anhydride-grafted propylene polymer material, wherein the propylene polymer material consists essentially of:
      (i) 10% to 50% of a propylene homopolymer having an isotactic index of 80% to 99%, or a copolymer selected from the group consisting of (a) propylene and ethylene, (b) propylene, ethylene and a CH₂=CHR α-olefin, where R is a C₂₋₈ straight or branched alkyl group, and (c) propylene and an α-olefin as defined above in (i)(b), the copolymer containing 85% to 99% propylene and having an isotactic index of 80% to 98%;
      (ii) 3% to 20% of a semi-crystalline, essentially linear copolymer fraction having a crystallinity of 20% to 60% by differential scanning calorimetry (DSC), wherein the copolymer is selected from the group consisting of (a) ethylene and propylene containing over 50% ethylene; (b) ethylene, propylene, and an α-olefin as defined above in (i)(b), containing 1% to 10% of the α-olefin and over 50% up to 98% of both ethylene and the α-olefin; and (c) ethylene and an α-olefin as defined in (i)(b), containing over 50% up to 98% of the α-olefin, which copolymer is insoluble in xylene at room or ambient temperature, and
      (iii) 40% to 80% of a copolymer fraction selected from the group consisting of a copolymer of (a) ethylene and propylene, wherein the copolymer contains from 20% to less than 40% ethylene; (b) ethylene, propylene, and an α-olefin as defined in (i)(b), wherein the α-olefin is present in an amount of 1% to 10%, and the amount of ethylene and α-olefin present is from 20% to less than 45%; and (c) ethylene and an α-olefin as defined in (i)(b), containing from 20% to less than 45% of the α-olefin, and optionally containing 0.5% to 10% of a diene, the copolymer fraction (iii) being soluble in xylene at ambient temperature, and having an intrinsic viscosity of about 1.7 to 3.0 dl/g, wherein the total amount of fractions (ii) and (iii), based on the total olefin polymer composition is 65% to 80%, the weight ratio of fractions (ii)/(iii) is 0.1 to 0.3, and the total content of ethylene or C₄₋₈ α-olefin or combination thereof in fractions (ii) + (iii) is less than 50%;
(4) a functionalized polymer that reacts with the anhydride groups of (2), (3), and, if present, (5), selected from the group consisting of:
   (a) 2.7 to 6 parts of an amine-terminated polyalkylene glycol per hundred parts of the thermoplastic olefin;
   (b) 2 to 6 parts per hundred parts of the thermoplastic olefin of a hydroxylated polymer selected from the group consisting of:
   (i) hydroxylated polyethylene,
      (ii) hydroxylated polybutene, and
      (iii) hydroxylated polybutadiene; and

   (c) 2 to 6 parts of a mixture of (a) + (b) per hundred parts of the thermoplastic olefin, wherein the ratio of (a) to (b) is 0.1 to 0.9; and, optionally,
(5) 4 parts to 15 parts per hundred parts of the thermoplastic olefin of a maleic anhydride-grafted ethylene polymer having a maleic anhydride content of 2% to 13% and a molecular weight Mₙ of 500 to 3000, wherein (2) + (3), or (2) + (3) + (5) is at least 16 parts but less than 27 parts per hundred parts of the thermoplastic olefin, and when the maleic anhydride-grafted polyethylene is present, (3) + (5) is equal to or greater than 10 parts per hundred parts of the thermoplastic olefin.

Injection molded parts such as automobile bumpers made from this composition are directly paintable with polar paints or coatings without the need for a layer of adhesion promoter between the thermoplastic olefin surface and the paint.

Component (1) of the composition of this invention is a thermoplastic olefin comprising, by weight,
(a) 10% to 60%, preferably 20% to 50%, of a propylene homopolymer having an isotactic index greater than 90, preferably between 95 and 98, or a crystalline propylene copolymer with ethylene and/or a C₄₋₈ α-olefin having a propylene content greater than 85% and an isotactic index of greater than 85%;
(b) 30% to 60%, preferably 30% to 50%, of an amorphous ethylene-propylene or ethylene-butene copolymer fraction, optionally containing 1% to 10% of a diene, which is xylene soluble at room temperature and contains 30% to 70% ethylene;
(c) 2% to 20%, preferably 7% to 15%, of a semi-crystalline ethylene-propylene or ethylene-butene copolymer that is xylene insoluble at room temperature and contains greater than 75% but less than 92% ethylene; and
(d) 5% to 20%, preferably 7% to 15%, of an ethylene polymer having a density of 0.91 to 0.96 g/cm³ and a melt index of 0.1 to 100 g/10 min, preferably 15 to 50 g/10 min. Ethylene homopolymer is preferred. However, copolymers containing 8% or less of an α-olefin comonomer can also be used.

The thermoplastic olefin is typically prepared by sequential polymerization in at least three stages. Fraction (a) can be made in the first reactor, fractions (b) and (c) in the second reactor, and fraction (d) in the third reactor. Alternatively, fraction (d) can be made in the second reactor and fractions (b) and (c) in the third reactor. The polymerization conditions and the polymerization catalyst are described in more detail in U.S. Patent 5,302,454, which is incorporated herein by reference. Alternatively, the four fractions can be prepared separately and then blended together. Sequential polymerization is preferred.

The C₄₋₈ α-olefins useful in the preparation of the thermoplastic olefin include, for example, butene-1; pentene-1; hexene-1; 4-methylpentene-1, and octene-1.

The diene, when present, is typically a butadiene; 1,4-hexadiene; 1,5-hexadiene, or ethylidenenorbornene.

The thermoplastic olefin is present in an amount of 100 parts by weight.

Component (2) is a maleic anhydride-grafted propylene homopolymer or ethylene/propylene random copolymer having an ethylene content of about 0.5% to about 4%, preferably about 1% to about 3%. Propylene homopolymer is preferred. The polymer has a maleic anhydride content of 3% to 4%, and preferably has a molecular weight Mₙ of 2500 to 25,000, most preferably about 3000 to about 10,000. Component (2) is present in an amount of 8 to about 14 parts, preferably about 10 to about 12 parts, per hundred parts of the thermoplastic olefin.

Component (3) is a maleic anhydride-grafted olefin polymer material selected from the group consisting of:
(a) a maleic anhydride-grafted polyolefin rubber comprising an ethylene/propylene or ethylene/butene copolymer rubber, optionally containing 0.5 % to 10% of a diene, preferably about 2% to about 6%, which contains 30% to 70%; preferably about 40% to about 60%, ethylene, and
(b) a maleic anhydride-grafted propylene polymer material, wherein the propylene polymer material consists essentially of:
   (i) 10% to 50% of a propylene homopolymer having an isotactic index of 80% to 99%, or a copolymer selected from the group consisting of (a) propylene and ethylene, (b) propylene, ethylene and a CH₂=CHR α-olefin, where R is a C₂₋₈ straight or branched alkyl group, and (c) propylene and an α-olefin as defined above in (i)(b), the copolymer containing 85% to 99% propylene and having an isotactic index of 80% to 98%;
   (ii) 3% to 20% of a semi-crystalline, essentially linear copolymer fraction having a crystallinity of 20% to 60% by differential scanning calorimetry (DSC), wherein the copolymer is selected from the group consisting of (a) ethylene and propylene containing over 50% ethylene; (b) ethylene, propylene, and an α-olefin as defined above in (i)(b), containing 1% to 10% of the α-olefin and over 50% up to 98% of both ethylene and the α-olefin; and (c) ethylene and an α-olefin as defined in (i)(b), containing over 50% up to 98% of the α-olefin, which copolymer is insoluble in xylene at room or ambient temperature; and
   (iii) 40% to 80% of a copolymer fraction selected from the group consisting of a copolymer of (a) ethylene and propylene, wherein the copolymer contains from 20% to less than 40% ethylene; (b) ethylene, propylene, and an α-olefin as defined in (i)(b), wherein the α-olefin is present in an amount of 1% to 10%, and the amount of ethylene and α-olefin present is from 20% to less than 45%; and (c) ethylene and an α-olefin as defined in (i)(b), containing from 20% to less than 45% of the α-olefin, and optionally containing 0.5% to 10% of a diene, the copolymer fraction (iii) being soluble in xylene at ambient temperature, and having an intrinsic viscosity of 1.7 to 3.0 dl/g, wherein the total amount of fractions (ii) and (iii), based on the total olefin polymer composition is 65% to 80%, the weight ratio of fractions (ii)/(iii) is about 0.1 to about 0.3, and the total content of ethylene or C₄₋₈ α-olefin or combination thereof in fractions (ii) + (iii) is less than 50%.

Fraction (i) is preferably present in an amount of 10% to about 40%, most preferably about 20% to about 35%, When (i) is a propylene homopolymer, the isotactic index is preferably about 85 to about 98. When (i) is a copolymer, the amount of propylene in the copolymer is preferably about 90% to about 99%.

Fraction (ii) is preferably present in an amount of about 7% to about 15%. Typically the crystallinity is about 20% to about 60% by DSC. Generally, the ethylene or α-olefin content or the combination of ethylene and the α-olefin when both are used is over 55% up to 98%, preferably about 80% to about 95%.

Fraction (iii) is preferably present in an amount of about 50% to about 70%. The ethylene or the α-olefin content or ethylene and the α-olefin content of component (iii) is preferably about 20% to about 38%, most preferably about 25% to about 38%.

Component (3)(a) can be made with a Ziegler-Natta catalyst, a metallocene catalyst, or a mixed catalyst, and can be amorphous or contain from about 1% to about 10% crystallinity as measured by DSC.

Component (3)(b) has at least one melt peak, determined by DSC, present at temperatures higher than 120°C, and at least one peak, relative to the vitreous transition, present at temperatures from -10°C and -35°C. In addition, these materials have a flexural modulus of less than 150 MPa, generally 20 to 100 MPa; a tensile strength at yield of 10 to 20 MPa; elongation at break over 400%; a tension set, at 75% strain, of 20% to 50%; a Shore D hardness of 20 to 35; a haze value of less than 40%, preferably less than 35%, and does not break (no brittle impact failure) when an Izod impact test is conducted at - 50°C.

Suitable α-olefins of the formula CH₂=CHR include, for example, butene-1; pentene-1; 4-methylpentene-1; hexene-1, and octene-1.

When a diene is present in Component (3)(a), it is typically 1,4-hexadiene, ethylidenenorbornene, or dicyclopentadiene. When a diene is present in Component (3)(b), it is typically a butadiene; 1,4-hexadiene; 1,5-hexadiene, or ethylidenenorbornene.

Component 3(b) can be prepared by a polymerization process comprising at least two stages, where in the first stage the propylene, or propylene and ethylene or the α-olefin, or propylene, ethylene and the α-olefin are polymerized to form component (i), and in the following stages the mixtures of ethylene and propylene or α-olefin, or propylene, ethylene and α-olefin, and optionally a diene, are polymerized to form components (ii) and (iii).

The polymerization can be conducted in the liquid phase, gas phase, or liquid-gas phase using separate reactors, all of which can be done either by batch or continuously. For example, it is possible to carry out the polymerization of component (i) using liquid propylene as a diluent, and the polymerization of components (ii) and (iii) in the gas phase, without intermediate stages except for the partial degassing of the propylene. The preparation of the propylene polymer material is described in more detail in U.S. 5,212,246, which is incorporated herein by reference.

The olefin polymer material (3) is present in an amount of 5 to 14 parts, preferably about 8 to about 12 parts, per hundred parts of the thermoplastic olefin. The olefin polymer material has a maleic anhydride content of at least 0.3%, but less than 3%, preferably less than 1%, and most preferably less than 0.8%. Levels of maleic anhydride equal to or greater than 3% give gels, poor adhesion, and poor durability.

Component (4) is a functionalized polymer that can react with the maleic anhydride groups in components (2), (3), and, if present, (5) selected from the group consisting of (a) an amine-terminated polyalkylene glycol such as polyethylene glycol, polypropylene glycol, copolymers of polyethylene glycol and polypropylene glycol, poly(1,2-butylene glycol), and poly(tetramethylene glycol), and (b) a hydroxylated polymer selected from the group consisting of (i) hydroxylated polyethylene, (ii) hydroxylated polybutene, and (iii) hydroxylated polybutadiene. Amine-terminated polyethylene oxide is preferred.

Component (4)(a), when present, is used in an amount of 2.7 to 6 parts, preferably about 2.8 to about 4 parts, per hundred parts of the thermoplastic olefin, and Component (4)(b), when present, is used in an amount of 2 to 6 parts, preferably about 3 to about 5 parts, per hundred parts of the thermoplastic olefin. A mixture of (a) + (b) can also be used in an amount of 2 to 6 parts per hundred parts of the thermoplastic olefin, where the ratio of (a) to (b) is about 0.1 to 0.9.

Optional component (5) is a maleic anhydride-grafted ethylene polymer having a maleic anhydride content of 2% to 13%, preferably about 3% to about 6%. Ethylene homopolymer is preferred. However, copolymers containing 10% or less of an α-olefin comonomer can also be used. The ethylene polymer preferably has a molecular weight Mₙ of 500 to 3000, most preferably about 650 to about 2500; a melting point of about 90°C to about 129°C, most preferably about 92° to about 126°C, and a viscosity of about 20 to about 1000, most preferably about 100 to about 500, SUS at 149°C (ASTM D-88). When component (5) is used, it is present in an amount of 4 to 15 parts, preferably about 5 to about 10 parts, per hundred parts of the thermoplastic olefin, and the amount of (3) + (5) is equal to or greater than 10 parts per hundred parts of the thermoplastic olefin.

The total amount of (2) + (3), or (2) + (3) + (5) is at least 16 parts but less than 27 parts, preferably about 18 to about 22 parts, per hundred parts of the thermoplastic olefin.

If non-polymeric additives such as conductive carbon black are used, they should be added after the functionalized polymer has reacted with the maleic anhydride-grafted polymers. Alternatively, an adduct of the functionalized polymer and maleic anhydride-grafted polyolefin can be prepared separately, then blended with the thermoplastic olefin.

The composition of the present invention can also contain other conventional additives, for example, antioxidants; stabilizers; extender oils such as paraffinic and naphthenic oils; fillers such as CaCO₃, talc, and zinc oxide, or flame retardants.

The compounding or melt blending of the components of the composition can be carried out on an open roll, in an internal mixer (Banbury or Haake mixers), and single-screw or twin-screw extruders.

Optionally the maleic anhydride-grafted polymers can be preblended, or they can be prereacted with component (4) prior to blending with the thermoplastic olefin. The former method is preferred, however.

In the following examples and comparative examples, the samples for testing were prepared by dry blending the ingredients and reactive mixing in a twin screw extruder at a temperature of 450°F and pelletizing the resultant material. The pellets were injection molded into disks that were painted with about a 1.2 to 2 mil thick coating using Du Pont 872 white paint and cured at 250°F for thirty minutes. A lattice pattern of squares with each square about ¼ inch in size was scribed on the painted disk at the end opposite the gate area of the disk Adhesive tape (3 M 898) was pressed onto the paint and pulled off to test the amount of paint removed or the paint adhesion. The % failure was recorded as the % of the squares removed by the tape after one pull. The durability was determined by using a Taber abrader with a type C scuffing head assembly and a one pound load. The painted disk was placed in an oven at 70°C for one hour, removed and placed on the platform of the abrader. The scuffing head was placed in contact with the painted surface and the disk was rotated for a specified number of cycles. The amount of paint removed from the complete circumference subtended by the scuffing head was recorded as the % failure.

The criteria set for acceptable paint adhesion was less than 10% failure (paint removed) by the adhesive tape and less than 20% of the paint removed by the Taber abrader after 25 cycles and 30% or less removed after 50 cycles.

In this specification all parts and percentages are by weight unless otherwise noted.

### Examples 1-7

Examples 1-7 show the paint adhesion and durability of compositions containing a thermoplastic olefin (TPO), various amounts of maleic anhydride-grafted olefin polymer material (MA-g-OPM), maleic anhydride-grafted polypropylene (MA-g-PP), and amine-terminated polyethylene oxide (ATPEO), with and without maleic anhydride-grafted polyethylene (MA-g-PE). The results are shown in Table 1.

In the table, the thermoplastic olefin contains 55% propylene homopolymer, 3% semi-crystalline ethylene/propylene copolymer that has a propylene content of ~10% and is insoluble in xylene at room temperature, 30% amorphous ethylene/propylene copolymer rubber that has an ethylene content of 50% and is soluble in xylene at room temperature, and 12% ethylene homopolymer having a melt index of about 50 g/10 min.

The MA-grafted OPM (1) was Exxelor VA-1803 ethylene/propylene rubber containing 0.7% grafted maleic anhydride, commercially available from Exxon Chemical Company.

The MA-grafted OPM (2) was Royaltuf 465A ethylene/propylene/non-conjugated diene terpolymer rubber containing 0.4% grafted maleic anhydride, having a Mooney viscosity (ML 1 + 4 @ 125°C) of 60 and an ethylene/propylene ratio of 75/25, commercially available from Uniroyal Chemical Co. Inc..

The MA-grafted polypropylene was Epolene E-43 maleic anhydride-modified polypropylene wax, commercially available from Eastman Chemical Company

The MA-grafted polyethylene was Ceramer 67 maleic anhydride-grafted polyethylene wax, commercially available from Petrolite Corporation.

The ATPEO was XTJ-418 monoamine-terminated polyethylene oxide, commercially available from Huntsman Corporation.

The antioxidant was Irganox B 225, a blend of 1 part Irganox 1010 2,2-bis[[3-(3,5-bis(1,1-dimethylethyl)-4-hydroxyphenyl]-1-oxopropoxy)methyl]-1,3-propanediyl-3,5-bis(1,1-dimethylethyl)-4-hydroxybenzene propanoate stabilizer and 1 part Irgasfos 168 tris(2,4-di-t-butylphenyl) phosphite, commercially available from Ciba-Geigy.

**Table 1**

| | Ex. 1 | Ex. 2 | Ex. 3 | Ex. 4 | Ex. 5 | Ex. 6 | Ex. 7 |
|---|---|---|---|---|---|---|---|
| TPO | 100 | 100 | 100 | 100 | 100 | 100 | 100 |
| MA-g-OPM (1) | 5 | 5 | 10 | 10 | 5 | 10 | 10 |
| MA-g-OPM (2) | 5 | 5 | - | - | - | - | - |
| MA-g-PP | 10 | 10 | 10 | 10 | 10 | 10 | 10 |
| MA-g-PE | - | 5 | - | - | 10 | - | - |
| ATPEO | 3 | 3 | 3 | 4 | 3 | 3 | 4 |
| Antioxidant | 0.2 | 0.2 | 0.2 | 0.2 | 0.2 | 0.2 | 0.2 |
| | | | | | | | |
| Paint Adhesion, % Failure | 3 | 0 | 6 | 0 | 0 | 9 | 0 |

| Durability, % Failure | | | | | | | |
|---|---|---|---|---|---|---|---|
| 25 Cycles | 10 | 0 | 8 | 15 | 0 | 15 | 15 |
| 50 Cycles | 20 | 0 | 8 | 20 | 12 | 15 | 25 |

Examples 1, 3, 4, 6 and 7 show that the combination of MA-grafted polypropylene and MA-grafted ethylene/propylene olefin polymer material gave both good adhesion and durability. Examples 2 and 5 show that combining MA-grafted polyethylene with the MA-grafted polypropylene and MA-grafted olefin polymer material gave a slight improvement in paint adhesion and an improvement in durability

### Comparative Examples 1-4

In Table 2, the ungrafted rubber used in Comparative Example 1 was Dutral 4038 ethylene/propylene/ethylidenenorbornene terpolymer rubber containing 4% ethylidenenorbornene, commercially available from Enichem America Inc.. All of the other components of the formulations were the same as in Examples 1-7.

**Table 2**

| | Comp Ex. 1 | Comp. Ex. 2 | Comp. Ex. 3 | Comp. Ex. 4 |
|---|---|---|---|---|
| TPO | 100 | 100 | 100 | 100 |
| Rubber | 10 | - | - | - |
| MA-g-OPM (1) | - | - | 5 | - |
| MA-g-OPM (2) | - | - | 5 | - |
| MA-g-PP | 10 | 20 | 5 | 10 |
| MA-g-PE | - | - | 10 | 10 |
| ATPEO | 4 | 4 | 3 | 3 |
| Antioxidant | 0.2 | 0.2 | 0.2 | 0.2 |
| | | | | |
| Paint Adhesion, % Failure | 45 | 0 | 54 | 28 |

| Durability, % Failure | | | | |
|---|---|---|---|---|
| 25 Cycles | 28 | 45 | 28 | 0 |
| 50 Cycles | 44 | 55 | 50 | 1 |

Comparative Example 1 showed that adding rubber that is not grafted with maleic anhydride gave both poor adhesion and poor durability. Comparative Example 2 showed that adding higher levels of MA-grafted polypropylene but no MA-grafted OPM gave good adhesion, but durability was still poor. Comparative Example 3 showed that low levels of MA-grafted polypropylene (5 parts) in combination with a MA-grafted OPM gave both poor adhesion and poor durability. Comparative Example 4 showed that combining MA-grafted polypropylene and MA-grafted polyethylene without MA-grafted olefin polymer material gave good durability, but poor paint adhesion.

### Examples 8-11

Examples 8-11 show the paint adhesion and durability of compositions containing a thermoplastic olefin (TPO), maleic anhydride-grafted olefin polymer materials (MA-g-OPM), maleic anhydride-grafted polypropylene (MA-g-PP), and three types of functionalized polymers, i.e., amine-terminated polyethylene oxide (ATPEO), hydroxylated polyethylene (HPE), and hydroxylated polybutene (HPB). The results are given in Table 3.

In Table 3, the thermoplastic elastomer, the maleic anhydride-grafted olefin polymer materials (1) and (2), the maleic anhydride-grafted polypropylene, the amine-terminated polyethylene oxide, and the antioxidant are the same as in Examples 1-7.

The maleic anhydride-grafted OPM (3) was a propylene polymer material comprising (a) 30% of a propylene/ethylene random copolymer having an ethylene content of 3.3%, (b) 6.8% of a semi-crystalline ethylene/propylene copolymer fraction that is insoluble in xylene at room temperature, and (c) 63.2% of an amorphous ethylene/propylene copolymer fraction that is soluble in xylene at room temperature, and contained 1% grafted maleic anhydride.

The MA-g-PE was Ceramer 67 maleic anhydride-grafted polyethylene wax, commercially available from Petrolite Corporation.

The HPE was Unilin 350 hydroxylated polyethylene wax, commercially available form Petrolite Corporation.

The HPB was HPVM 2202 hydroxylated polybutene, commercially available from Shell Chemical Company.

**Table 3**

| | Ex. 8 | Ex. 9 | Ex. 10 | Ex. 11 |
|---|---|---|---|---|
| TPO | 100 | 100 | 100 | 100 |
| MA-g-OPM (1) | - | - | - | 5 |
| MA-g-OPM (2) | - | 10 | 10 | - |
| MA-g-OPM (3) | 10 | - | - | - |
| MA-g-PP | 10 | 10 | 10 | 10 |
| MA-g-PE | - | - | - | 10 |
| ATPEO | 3 | - | - | - |
| HPE | - | 6 | - | - |
| HPB | - | - | 3 | 3 |
| Antioxidant | 0.2 | 0.2 | 0.2 | 0.2 |
| | | | | |
| Paint Adhesion, % Failure | 0 | 0 | 0 | 0 |

| Durability, % Failure | | | | |
|---|---|---|---|---|
| 25 Cycles | 0 | 18 | 13 | 0 |
| 50 Cycles | 0 | 26 | 18 | 0 |

### Comparative Examples 5-9

In Table 4, the thermoplastic olefin, maleic anhydride-grafted olefin polymer materials (1) and (3), the maleic anhydride-grafted polypropylene, the amine-terminated polyethylene oxide, and the antioxidant were the same as in Examples 8-13. The maleic anhydride-grafted OPM (4) was the same as maleic anhydride-grafted OPM (3), except that it contained 3% grafted maleic anhydride instead of 1%.

**Table 4**

| | Comp. Ex. 5 | Comp. Ex. 6 | Comp. Ex. 7 | Comp. Ex. 8 | Comp. Ex. 9 |
|---|---|---|---|---|---|
| TPO | 100 | 100 | 100 | 100 | 100 |
| MA-g-OPM (1) | - | 10 | 10 | - | - |
| MA-g-OPM (3) | - | - | - | 10 | - |
| MA-g-OPM (4) | 10 | - | - | - | 10 |
| MA-g-PP | 10 | 10 | 10 | - | - |
| ATPEO | 3 | 2.5 | 7 | 3 | 3 |
| Antioxidant | 0.2 | 0.2 | 0.2 | 0.2 | 0.2 |
| | | | | | |
| Paint Adhesion, % Failure | 30 | 18 | 30 | 100 | 100 |

| Durability, % Failure | | | | | |
|---|---|---|---|---|---|
| 25 Cycles | 45 | 35 | 50 | 100 | 100 |
| 50 Cycles | 55 | 38 | 75 | 100 | 100 |

These comparative examples show that both adhesion and durability are unacceptable when the MA-g-OPM contains 3% or more grafted maleic anhydride (Comp. Ex. 5 and 9), too much or too little ATPEO is used (Comp. Ex. 6 and 7), and when MA-g-PP is not included in the composition (Comp. Ex. 8 and 9).

### Examples 12 and 13

These examples illustrate the use of a mixture of an amine-terminated polyalkylene glycol and a hydroxylated polymer as the functionalized polymer, component (4) of the composition of this invention. The results are shown in Table 5

In Table 5, the thermoplastic olefin, the maleic anhydride-grafted polypropylene, the maleic anhydride-grafted olefin polymer materials (1) and (2), the ATPEO, and the antioxidant are the same as those used in Examples 1-7. The HPE and HPB are the same as those used in Examples 8-11.

**Table 5**

| | Ex. 12 | Ex. 13 |
|---|---|---|
| TPO | 100 | 100 |
| MA-g-OPM (1) | 5 | 5 |
| MA-g-OPM (2) | 5 | 5 |
| MA-g-PP | 10 | 10 |
| ATPEO | 3 | 3 |
| HPE | 3 | - |
| HPB | - | 1 |
| Antioxidant | 0.2 | 0.2 |
| | | |
| Paint Adhesion, % Failure | 0 | 0 |

| Durability, % Failure | | |
|---|---|---|
| 25 cycles | 8 | 16 |
| 50 cycles | 20 | 28 |

Other features, advantages and embodiments of the invention disclosed herein will be readily apparent to those exercising ordinary skill after reading the foregoing disclosure. In this regard, while specific embodiments of the invention have been described in considerable detail, variations and modifications of these embodiments can be effected without departing from the spirit and scope of the invention as described and claimed.

## Claims

1. A composition comprising, by weight,
(1) 100 parts of a thermoplastic olefin comprising:
(a) 10% to 60% of a propylene homopolymer having an isotactic index greater than 90, or a crystalline propylene copolymer with ethylene and/or a C₄₋₈ α-olefin having a propylene content greater than 85% and an isotactic index of greater than 85%;
(b) 30% to 60% of an amorphous ethylene-propylene or ethylene-butene copolymer fraction, optionally containing 1% to 10% of a diene, which is xylene soluble at room temperature and contains 30% to 70% ethylene;
(c) 2% to 20% of a semi-crystalline ethylene-propylene or ethylene-butene copolymer that is xylene insoluble at room temperature and contains greater than 75% but less than 92% ethylene; and
(d) 5% to 20% of an ethylene polymer having a density of 0.91 to 0.96 g/cm³ and a melt index of 0.1 to 100 g/10 min;
(2) 8 parts to 14 parts of a maleic anhydride-grafted propylene homopolymer or ethylene/propylene random copolymer containing an ethylene content of 0.5 to 4% having a maleic anhydride content of 3 to 4% and a molecular weight Mₙ of 2500 to 25,000, per hundred parts of the thermoplastic olefin;
(3) 5 parts to 14 parts per hundred parts of the thermoplastic olefin of a maleic anhydride-grafted olefin polymer material having a maleic anhydride content of at least 0.3% but less than 3%, selected from the group consisting of:
(a) a maleic anhydride-grafted polyolefin rubber comprising an ethylene/propylene or ethylene/butene copolymer rubber, optionally containing 0.5 % to 10% of a diene, which contains 30% to 70% ethylene, and
(b) a maleic anhydride-grafted propylene polymer material, wherein the propylene polymer material consists of:
(i) 10% to 50% of a propylene homopolymer having an isotactic index of 80% to 99%, or a copolymer selected from the group consisting of (a) propylene and ethylene, (b) propylene, ethylene and a CH₂=CHR α-olefin, where R is a C₂₋₈ straight or branched alkyl group, and (c) propylene and an α-olefin as defined above in (i)(b), the copolymer containing 85% to 99% propylene and having an isotactic index of 80% to 98%;
(ii) 3% to 20% of a semi-crystalline, linear copolymer fraction having a crystallinity of 20% to 60% by differential scanning calorimetry (DSC), wherein the copolymer is selected from the group consisting of (a) ethylene and propylene containing over 50% ethylene; (b) ethylene, propylene, and an α-olefin as defined above in (i)(b), containing 1% to 10% of the α-olefin and over 50% up to 98% of both ethylene and the α-olefin; and (c) ethylene and an α-olefin as defined in (i)(b), containing over 50% up to 98% of the α-olefin, which copolymer is insoluble in xylene at room or ambient temperature; and
(iii) 40% to 80% of a copolymer fraction selected from the group consisting of a copolymer of (a) ethylene and propylene, wherein the copolymer contains from 20% to less than 40% ethylene; (b) ethylene, propylene, and an α-olefin as defined in (i)(b), wherein the α-olefin is present in an amount of 1% to 10%, and the amount of ethylene and α-olefin present is from 20% to less than 45%; and (c) ethylene and an α-olefin as defined in (i)(b), containing from 20% to less than 45% of the α-olefin, and optionally containing 0.5% to 10% of a diene, the copolymer fraction (iii) being soluble in xylene at ambient temperature, and having an intrinsic viscosity of 1.7 to 3.0 dl/g, wherein the total amount of fractions (ii) and (iii), based on the total olefin polymer composition is 65% to 80%, the weight ratio of fractions (ii)/(iii) is 0.1 to 0.3, and the total content of ethylene or C₄₋₈ α-olefin or combination thereof in fractions (ii) + (iii) is less than 50%; and
(4) a functionalized polymer that is reactive with the anhydride groups of the grafted polymers, selected from the group consisting of:
(a) 2.7 to 6 parts of an amine-terminated polyalkylene glycol per hundred parts of thermoplastic olefin;
(b) 2 to 6 parts per hundred parts of the thermoplastic olefin of a hydroxylated polymer selected from the group consisting of:
(i) hydroxylated polyethylene,
(ii) hydroxylated polybutene, and
(iii) hydroxylated polybutadiene; and
(c) 2 to 6 parts per hundred parts of the thermoplastic olefin of a mixture of (a) + (b), where the ratio of (a) to (b) is 0.1 to 0.9,
wherein (2) + (3) is at least 16 parts but less than 27 parts per hundred parts of the thermoplastic olefin.

2. The composition of claim 1, wherein (4) is an amine-terminated polyalkylene glycol.

3. The composition of claim 1, wherein (4) is a mixture of (a) and (b), the total amount of (a) + (b) is 2 to 6 parts per hundred parts of the thermoplastic olefin, and the ratio of (a) to (b) is 0.1 to 0.9.

4. The composition of claim 1 which additionally comprises (5), 4 parts to 15 parts per hundred parts of the thermoplastic olefin, of a maleic anhydride-grafted ethylene polymer containing 10% or less of an α-olefin comonomer having a maleic anhydride content of 2% to 13% and a molecular weight Mₙ of 500 to 3000, wherein (2) + (3) + (5) is at least 16 parts but less than 27 parts per hundred parts of the thermoplastic olefin, and (3) + (5) is equal to or greater than 10 parts per hundred parts of the thermoplastic olefin.

5. The composition of claim 4, wherein (4) is an amine-terminated polyalkylene glycol.

6. The composition of claim 4, wherein (4) is a mixture of (a) + (b), the total amount of (a) + (b) is 2 to 6 parts per hundred parts of the thermoplastic olefin, and the ratio of (a) to (b) is 0.1 to 0.9.

7. An injection molded article comprising the composition of claim 1.

8. An injection molded article comprising the composition of claim 4.

## Patentansprüche

1. Zusammensetzung, die bezogen auf das Gewicht umfasst
(1) 100 Teile eines thermoplastischen Olefins, umfassend:
(a) 10 % bis 60 % eines Propylenhomopolymers mit einem Isotaktizitätsindex größer als 90, oder eines kristallinen Propylencopolymers mit Ethylen und/oder einem C₄₋₈ α-Olefin, das einen Propylengehalt größer als 85 % und einen Isotaktizitätsindex von größer als 85 % besitzt,
(b) 30 % bis 60 % einer amorphen Ethylen-Propylen- oder Ethylen-Buten-Copolymerfraktion, die wahlweise 1 % bis 10 % eines Diens enthält, und die bei Raumtemperatur in Xylol löslich ist und 30 % bis 70 % Ethylen enthält,
(c) 2 % bis 20 % eines semikristallinen Ethylen-Propylen- oder EthylenButen-Copolymers, das bei Raumtemperatur in Xylol unlöslich ist und mehr als 75 % aber weniger als 92 % Ethylen enthält, und
(d) 5 % bis 20 % eines Ethylenpolymers mit einer Dichte von 0,91 bis 0,96 g/cm³ und einem Schmelzindex von 0,1 bis 100 g/10 min,
(2) 8 Teile bis 14 Teile pro hundert Teile des thermoplastischen Olefins eines Maleinsäureanhydrid-gepfropften Propylenhomopolymers oder statistischen Ethylen/Propylen-Copolymers, mit einem Ethylengehalt von 0,5 bis 4 %, wobei diese einen Maleinsäureanhydridgehalt von 3 bis 4 % besitzen und ein Molekulargewicht Mₙ von 2.500 bis 25.000,
(3) 5 Teile bis 14 Teile pro hundert Teile des thermoplastischen Olefins eines Maleinsäureanhydrid-gepfropften Olefinpolymermaterials mit einem Maleinsäureanhydridgehalt von mindestens 0,3 % aber weniger als 3 %, das ausgewählt ist aus der Gruppe bestehend aus:
(a) einem Maleinsäureanhydrid-gepfropften Polyolefinkautschuk, der einen Ethylen/Propylen- oder Ethylen/Buten-Copolymerkautschuk umfasst, der wahlweise 0,5 % bis 10 % eines Diens enthält, und der 30 % bis 70 % Ethylen enthält, und
(b) einem Maleinsäureanhydrid-gepfropften Propylenpolymermaterial, wobei das Propylenpolymermaterial besteht aus:
(i) 10 % bis 50 % eines Propylenhomopolymers mit einem Isotaktizitätsindex von 80 % bis 99 % oder einem Copolymer, ausgewählt aus der Gruppe bestehend aus (a) Propylen und Ethylen, (b) Propylen, Ethylen und einem CH₂=CHR α-Olefin, worin R eine geradkettige oder verzweigte C₂₋₈ Alkylgruppe ist, und (c) Propylen und einem α-Olefin wie zuvor in (i)(b) definiert, wobei das Copolymer 85 % bis 99 % Propylen enthält und einen Isotaktizitätsindex von 80 % bis 98 % besitzt,
(ii) 3 % bis 20 % einer semikristallinen, linearen Copolymerfraktion mit einer Kristallinität von 20 % bis 60 %, gemessen mit Differentialscanningkalorimetrie (DSC), wobei das Copolymer ausgewählt ist aus der Gruppe bestehend aus (a) Ethylen und Propylen, enthaltend mehr als 50 % Ethylen, (b) Ethylen, Propylen und einem α-Olefin wie zuvor in (i)(b) definiert, enthaltend 1 % bis 10 % des α-Olefins und über 50 % und bis zu 98 % von Ethylen und dem α-Olefin, und (c) Ethylen und einem α-Olefin wie in (i)(b) definiert, das über 50 % und bis zu 98 % des α-Olefins enthält, wobei das Copolymer bei Raum- oder Umgebungstemperatur in Xylol unlöslich ist, und
(iii) 40 % bis 80 % einer Copolymerfraktion, die ausgewählt ist aus der Gruppe bestehend aus einem Copolymer von (a) Ethylen und Propylen, wobei das Copolymer 20 % bis weniger als 40 % Ethylen enthält, (b) Ethylen, Propylen, und einem α-Olefin wie in (i)(b) definiert, wobei das α-Olefin in einer Menge von 1 bis 10 % vorhanden ist und die vorhandene Menge von Ethylen und α-Olefin 20 % bis weniger als 45 % beträgt, und (c) Ethylen und einem α-Olefin wie in (i)(b) definiert, das 20 % bis weniger als 45 % des α-Olefins enthält und wahlweise 0,5 % bis 10 % eines Diens enthält, wobei die Copolymerfraktion (iii) bei Raumtemperatur in Xylol löslich ist und eine intrinsische Viskosität von 1,7 bis 3,0 dl/g besitzt, wobei die Gesamtmenge der Fraktionen (ii) und (iii), bezogen auf die gesamte Olefinpolymerzusammensetzung, 65 % bis 80 % beträgt, das Gewichtsverhältnis der Fraktionen (ii)/(iii) 0,1 bis 0,3 ist und der Gesamtgehalt an Ethylen oder C₄₋₈ α-Olefin oder der Kombination davon in den Fraktionen (ii)+(iii) weniger als 50 % beträgt, und
(4) ein funktionalisiertes Polymer, das mit den Anhydridgruppen der gepfropften Polymere reaktiv ist und auswählt ist aus der Gruppe bestehend aus:
(a) 2,7 bis 6 Teilen eines Amin-terminierten Polyalkylenglykols pro hundert Teile des thermoplastischen Olefins,
(b) 2 bis 6 Teilen pro hundert Teile des thermoplastischen Olefins eines hydroxylierten Polymers, das ausgewählt ist aus der Gruppe bestehend aus:
(i) hydroxyliertem Polyethylen,
(ii) hydroxyliertem Polybuten, und
(iii) hydroxyliertem Polybutadien, und
(c) 2 bis 6 Teile pro hundert Teile des thermoplastischen Olefins einer Mischung von (a)+(b), wobei das Verhältnis von (a) zu (b) 0,1 bis 0,9 beträgt,
wobei (2)+(3) mindestens 16 Teile aber weniger als 27 Teile pro hundert Teile des thermoplastischen Olefins beträgt.

2. Zusammensetzung nach Anspruch 1, worin (4) ein Amin-terminiertes Polyalkylenglykol ist.

3. Zusammensetzung nach Anspruch 1, worin (4) eine Mischung (a) und (b) ist, wobei die Gesamtmenge von (a)+(b) 2 bis 6 Teile pro hundert Teile des thermoplastischen Olefins beträgt und das Verhältnis von (a) zu (b) 0,1 bis 0,9 beträgt.

4. Zusammensetzung nach Anspruch 1, zusätzlich umfassend (5), 4 Teile bis 15 Teile pro hundert Teile des thermoplastischen Olefins eines Maleinsäureanhydrid-gepfropften Ethylenpolymers, das 10 % oder weniger eines α-Olefin-Comonomers enthält, mit einem Maleinsäureanhydridgehalt von 2 % bis 13 % und einem Molekulargewicht Mₙ von 500 bis 3.000, wobei (2)+(3)+(5) mindestens 16 Teile aber weniger als 27 Teile pro hundert Teile des thermoplastischen Olefins ausmachen und (3)+(5) gleich oder größer als 10 Teile pro hundert Teile des thermoplastischen Olefins ist.

5. Zusammensetzung nach Anspruch 4, worin (4) ein Amin-terminiertes Polyalkylenglykol ist.

6. Zusammensetzung nach Anspruch 4, worin (4) eine Mischung von (a) + (b) ist, wobei die Gesamtmenge von (a)+(b) 2 bis 6 Teile pro hundert Teile des thermoplastischen Olefins beträgt und das Verhältnis von (a) zu (b) 0,1 bis 0,9 beträgt.

7. Spritzgegossener Artikel, umfassend die Zusammensetzung aus Anspruch 1.

8. Spritzgegossener Artikel, umfassend die Zusammensetzung aus Anspruch 4.

## Revendications

1. Composition comprenant, en poids
(1) 100 parties d'une oléfine thermoplastique comprenant :
(a) à concurrence de 10 % à 60 %, un homopolymère de propylène possédant un indice isotactique supérieur à 90, ou un copolymère de propylène cristallin avec de l'éthylène et/ou une α-oléfine en C₄-C₈, possédant une teneur en propylène supérieure à 85 % et un indice isotactique supérieur à 85 % ;
(b) à concurrence de 30 % à 60 %, une fraction de copolymère amorphe d'éthylène-propylène ou d'éthylène-butène, contenant le cas échéant un diène à concurrence de 1 % à 10 %, etant soluble dans du xylène à la température ambiante, et contenant de l'éthylène à concurrence de 30 % à 70 % ;
(c) à concurrence de 2 % à 20 %, un copolymère semi-cristallin d'éthylène-propylène ou d'éthylène-butène, à savoir du xylène insoluble à la température ambiante, et contenant de l'éthylène à concurrence de plus de 75 %, mais de moins de 92 % ; et
(d) à concurrence de 5 % à 20 %, un polymère d'éthylène possédant une densité de 0,91 a 0,96 g/cm³ et un indice de fusion de 0,1 à 100 g/10 min ;
(2) de 8 parties à 14 parties d'un homopolymère de propylène ou d'un copolymère statistique d'éthylène/propylène greffé avec de l'anhydride maléique, possédant une teneur en éthylène de 0,5 à 4 %, une teneur en anhydride maléique de 3 à 4 % et un poids moléculaire Mₙ de 2500 à 25.000, par 100 parties de l'oléfine thermoplastique ;
(3) de 5 parties à 14 parties, par 100 parties de l'oléfine thermoplastique, d'une matière polymère oléfinique greffée avec de l'anhydride maléique, possédant une teneur en anhydride maléique d'au moins 0,3 %, mais inférieure à 3 %, choisie parmi le groupe constitué par :
(a) un caoutchouc de polyoléfine greffée avec de l'anhydride maléique comprenant un caoutchouc de copolymère d'éthylène/ - propylène ou d'éthylène/butène, contenant le cas échéant un diène à concurrence de 0,5 % à 10 %, qui contient de l'éthylène à concurrence de 30 % à 70 %, et
(b) une matière de polymère de propylène greffée avec de l'anhydride maléique, la matière polymère de propylène étant constituée par :
(i) à concurrence de 10 % à 50 %, un homopolymère de propylène possédant un indice isotactique de 80 % à 99 %, ou un copolymère choisi parmi le groupe constitué par (a) du propylène et de l'éthylène, (b) du propylène, de l'éthylène et une α-oléfine CH₂=CHR dans laquelle R représente un groupe alkyle en C₂-C₈ à chaîne droite ou ramifiée, et (c) du propylène et une α-oléfine telle que définie ci-dessus dans (i)(b), le copolymère contenant du propylène à concurrence de 85 % à 99 % et possédant un indice isotactique de 80 % à 98 % ;
(ii) à concurrence de 3 % à 20 %, une fraction de copolymère linéaire semi-cristallin possédant une cristallinité de 20 % à 60 % par analyse calorimétrique différentielle à compensation de puissance (DSC), le copolymère étant choisi parmi le groupe constitué par (a) de l'éthylène et du propylène, contenant de l'éthylène à concurrence de plus de 50 % ; (b) de l'éthylène, du propylène et une α-oléfine telle que définie ci-dessus dans (i)(b), contenant l'α-oléfine à concurrence de 1 % à 10 % et à la fois l'éthylène et l'α-oléfine à concurrence de plus de 50 % jusqu'à 98 % ; et (c) de l'éthylène et une α-oléfine telle que définie ci-dessus dans (i)(b), contenant l'α-oléfine à concurrence de plus de 50 % jusqu'à 98 %, ledit copolymère étant insoluble dans du xylène à la température ambiante ; et
(iii) à concurrence de 40 % à 80 %, une fraction de copolymère choisie parmi le groupe constitué par un copolymère (a) d'éthylène et de propylène, le copolymère contenant de l'éthylène à concurrence de 20 % à moins de 40 % ; (b) d'éthylène, de propylène et d'une α-oléfine telle que définie ci-dessus dans (i)(b), l'α-oléfine étant présente en une quantité de 1 % à 10 %, et la quantité de l'éthylène et de l'α-oléfine présents s'élevant de 20 % à moins de 45 % ; et (c) de l'éthylène et une α-oléfine telle que définie ci-dessus dans (i)(b), contenant l'α-oléfine à concurrence de 20 % à moins de 45 %, et contenant le cas échéant un diène à concurrence de 0,5 % à 10 %, la fraction de copolymère (iii) étant soluble dans du xylène à la température ambiante et possédant une viscosité intrinsèque de 1,7 à 3,0 dl/g, la quantité totale des fractions (ii) et (iii), basée sur la composition totale de polymère oléfinique, s'élevant de 65 % à 80 %, le rapport pondéral des fractions (ii)/(iii) s'élevant de 0,1 à 0,3, et la teneur totale en éthylène ou en α-oléfine en C₄-C₈ ou encore en une combinaison des deux dans les fractions (ii)+(iii) étant inférieure à 50 % ; et
(4) un polymère fonctionnalisé apte à réagir avec les groupes anhydride des polymères greffés, choisi parmi le groupe constitué par :
(a) de 2,7 à 6 parties d'un polyalkylèneglycol à terminaison amine par 100 parties de l'oléfine thermoplastique ;
(b) de 2 à 6 parties, par 100 parties de l'oléfine thermoplastique, d'un polymère hydroxylé choisi parmi le groupe constitué par :
(i) du polyéthylène hydroxylé ;
(ii) du polybutène hydroxylé ; et
(iii) du polybutadiène hydroxylé ; et
(c) de 2 à 6 parties, par 100 parties de l'oléfine thermoplastique, d'un mélange de (a)+(b), le rapport de (a) à (b) s'élevant de 0,1 à 0,9,
(2)+(3) représentant au moins 16 parties, mais moins de 27 parties, par 100 parties de l'oléfine thermoplastique.

2. Composition selon la revendication 1, dans laquelle (4) représente un polyalkylèneglycol à terminaison amine.

3. Composition selon la revendication 1, dans laquelle (4) représente un mélange de (a)+(b), la quantité totale de (a)+(b) s'élevant de 2 à 6 parties par 100 parties de l'oléfine thermoplastique, et le rapport de (a) à (b) s'élevant de 0,1 à 0,9.

4. Composition selon la revendication 1, qui comprend en outre (5), de 4 parties à 15 parties par 100 parties de l'oléfine thermoplastique, un polymère d'éthylène greffé avec de l'anhydride maléique, contenant un comonomère d'α-oléfine à concurrence de 10 % ou moins, possédant une teneur en anhydride maléique de 2 % à 13 % et un poids moléculaire Mₙ de 500 à 3000, (2)+(3)+(5) représentant au moins 16 parties, mais moins de 27 parties par 100 parties de l'oléfine thermoplastique, et (3)+(5) étant égal ou supérieur à 10 parties par 100 parties de l'oléfine thermoplastique.

5. Composition selon la revendication 4, dans laquelle (4) représente un polyalkylèneglycol à terminaison amine.

6. Composition selon la revendication 4, dans laquelle (4) représente un mélange de (a)+(b), la quantité totale de (a)+(b) s'élevant de 2 à 6 parties par 100 parties de l'oléfine thermoplastique, et le rapport de (a) à (b) s'élevant de 0,1 à 0,9.

7. Article moulé par injection comprenant la composition selon la revendication 1.

8. Article moulé par injection comprenant la composition selon la revendication 4.
